(19) Europäisches Patentamt
European Patent Office
Office européen des brevets

(11) **EP 1 630 812 A2**

(12) **EUROPEAN PATENT APPLICATION**

(43) Date of publication:
01.03.2006 Bulletin 2006/09

(51) Int Cl.:
*G11B 27/034* (2006.01)

(21) Application number: 05255086.0

(22) Date of filing: 17.08.2005

| | |
|---|---|
| (84) Designated Contracting States:<br>AT BE BG CH CY CZ DE DK EE ES FI FR GB GR HU IE IS IT LI LT LU LV MC NL PL PT RO SE SI SK TR<br>Designated Extension States:<br>AL BA HR MK YU | • **Ohsawa, Takao**<br>**c/o Sony Corporation**<br>**Shinagawa-ku,**<br>**Tokyo (JP)**<br>• **Ueda, Hitoshi**<br>**c/o Sony Corporation**<br>**Shinagawa-ku,**<br>**Tokyo (JP)** |
| (30) Priority: 30.08.2004 JP 2004250823 | |
| (71) Applicant: **SONY CORPORATION**<br>**Tokyo (JP)** | (74) Representative: **Merryweather, Colin Henry**<br>**J.A. Kemp & Co.**<br>**14 South Square**<br>**Gray's Inn**<br>**London WC1R 5JJ (GB)** |
| (72) Inventors:<br>• **Matsui, Yuji**<br>**c/o Sony Corporation**<br>**Shinagawa-ku,**<br>**Tokyo (JP)** | |

(54) **Edit recording method and recording/reproducing apparatus**

(57)     Disclosed is an edit recording method for use in a recording/reproducing apparatus which refers to, reconstructs, and writes back the content of a base recorded in a recording medium at the time of the edit recording, including the steps of acquiring, in error-correcting-processing-unit, position information indicating the last record position at the end time of recording, calculating an edit recording-standby point a predetermined distance before the acquired last record position set as the edit recording starting point, setting operation mode to a recording-standby state at the calculated edit recording-standby point, and repeating "recording", "recording-standby", and "recording" based on the position information in error-correcting-processing-unit at the end time of recording.

FIG.1

**Description**

The present invention relates to a edit recording method for use in a recording/reproducing apparatus such as a video tape recorder and a recording/reproducing apparatus.

A format for compressing video data according to, for example, a DV (Digital Video) system and recording the video data on a magnetic tape has been specified as a DV format of a consumer digital video tape recorder.

In the above format, in order to effectively perform a edit recording in which a recorded video image and a newly-input video image are connected to each other for recording, the data (system data) needed for the edit recording are set, for each predetermined number of pictures, at the front stage of the pictures in bulk, and thereby the edit recording can be started from any frame. The edit recording is started from the top of frames. When a recording current is supplied in sync with a frame pulse, the edit recording can be started (refer to, for example, Jpn. Pat. Appln. Publication No. Hei. 7-75413).

A format for compressing video data according to, for example, an HDV system,and recording the video data on a magnetic tape has been specified as an HDV format of a digital video tape recorder. With this format, variable length data having a variable frame size such as an MPEG-PES (Packtized Elementary Stream) is recorded on a magnetic tape (refer to, for example, Jpn. Pat. Appln. Laid-Open Publication No. 2004-164731).

When the edit recording is performed for variable length data having a variable frame size such as an MPEG-PES (Packtized Elementary Stream), the location at which the edit recording can be performed is limited to, for example, where I-picture or P-picture exists. Therefore, it is necessary to search a start point of edit recording before the edit recording. Further, when the obtained start point is adopted without modification, the edit recording may be started from an unintended location, in some cases. Further, even when a recording current is supplied in sync with a frame pulse, the edit recording may fail in some cases. In this case, it is necessary to supply the recording current from the start point of the edit recording exactly.

In view of the above situation, it is desirable to provide a edit recording method that allows a edit recording to be performed adequately and a recording/reproducing apparatus.

The advantages and features of the present invention will be more apparent from the following description taken in conjunction with the accompanying drawings.

According to the present invention, there is provided an edit recording method for use in a recording/reproducing apparatus which refers to, reconstructs, and writes back the content of a base recorded in a recording medium at the time of the edit recording, including the steps of: acquiring, in error-correcting-processing-unit, position information indicating the last record position at the end time of recording; calculating an edit recording-standby point a predetermined distance before the acquired last record position set as the edit recording starting point; setting operation mode to a recording-standby state at the calculated edit recording-standby point; and repeating "recording", "recording-standby", and "recording" based on the position information in error-correcting-processing-unit at the end time of recording.

According to the present invention, there is provided a recording/reproducing apparatus which refers to, reconstructs, and writes back the content of a base recorded in a recording medium at the time of the edit recording, including: control means for acquiring, in error-correcting-processing-unit, position information indicating the last record position at the end time of recording, calculating a edit recording-standby point a predetermined distance before the acquired last record position set as the edit recording starting point, and setting operation mode to a recording-standby state at the calculated edit recording-standby point, wherein "recording", "recording-standby", and "recording" are repeated based on the position information in error-correcting-processing-unit at the end time of recording.

According to the present invention, it is possible to adequately perform the edit recording.

FIG. 1 is a block diagram showing a configuration of a recording/reproducing apparatus according to the present invention;

FIG. 2 is a view schematically showing a data recording state on a DRAM and a magnetic tape in the recording/reproducing apparatus;

FIG. 3 is a table showing the content of ECCTB;

FIG. 4 is a view schematically explaining searching of a edit recording starting point in the recording/reproducing apparatus and a method of inevitably finding the same edit staring point when the edit point is searched from the same tape position;

FIG. 5 is a flowchart showing the procedure performed when the edit recording that repeats "recording", "recording-standby", and "recording" is executed;

FIG. 6 is a view schematically explaining a control performed at the recording end time;

FIG. 7 is a view schematically explaining a case where the edit recording is started from a currently reproduced image;

FIG. 8 is a flowchart showing the procedure for controlling recording start timing; and

FIG. 9 is a view schematically showing control for recording start timing in the edit recording.

An embodiment of the present invention will be described below in detail with reference to the accompanying drawings. It should be noted that the present invention is not limited to the following embodiment and can be arbitrarily modified without departing from the spirit and scope of the invention.

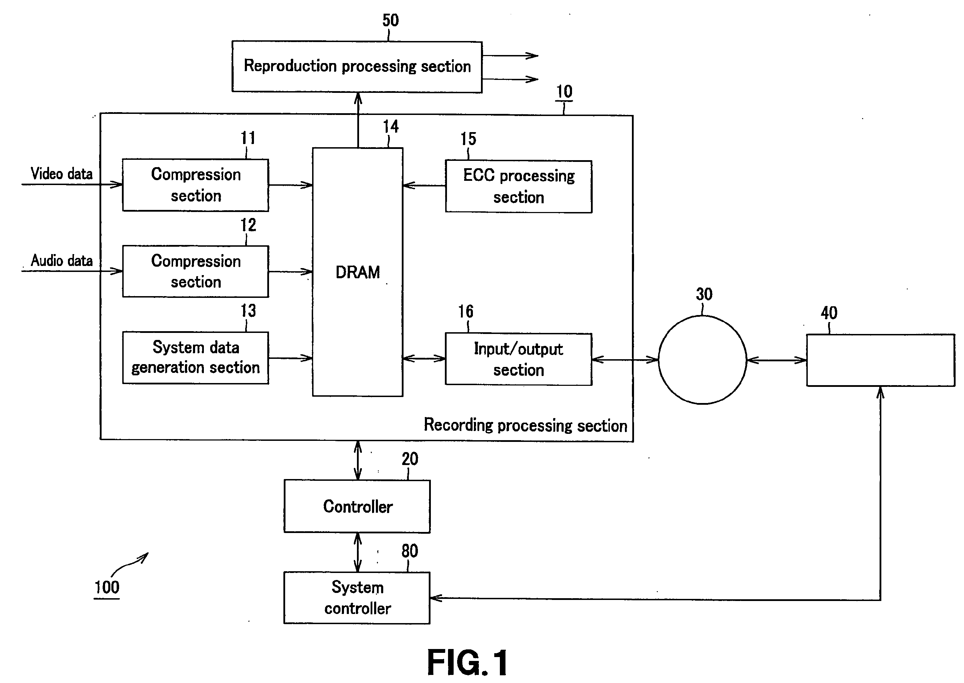

The present invention is applied, for example, to a recording/reproducing apparatus 100 as shown in FIG. 1.

The recording/reproducing apparatus 100 records input video data and audio data on a magnetic tape 40 through a rotation head 30 while allowing a recording processing section 10, which operates under the control of a controller 20, to form a predetermined data unit (hereinafter, referred to as "pack") on a DRAM 14. Further, the recording/reproducing apparatus 100 allows the rotation head 30 to read out video data and audio data recorded, as a pack, on the magnetic tape 40, store the read out data in the DRAM 14, and allows a reproduction processing section 50 to reproduce the video data and audio data. In order to realize the above functions, the recording/reproducing apparatus 100 has the controller 20 which controls the operations of the recording processing section 10 and reproduction processing section 50 and a system controller 80 which controls the controller 20 to record data stored in the DRAM 14 onto the magnetic tape 40 or to readout data from the magnetic tape 40 so as to store the readout data on the DRAM 14.

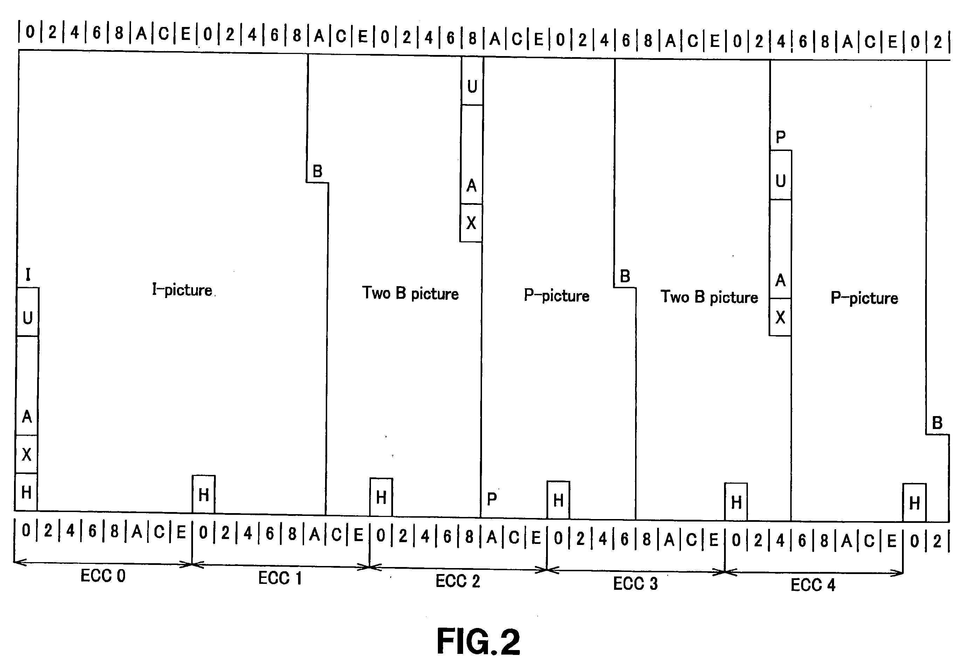

FIG. 2 shows a data recording state on the DRAM 14 and magnetic tape 40 in the recording/reproducing apparatus 100. FIG. 2 shows a recording state of video data having a GOP structure of N = 15 (I-picture is placed every 15 pictures) and M = 3 (P-picture is placed every 3 pictures) on the DRAM 14 and magnetic tape 40. That is, one pack is constituted by M (three, in this case) picture data, AUX data (AUX-V: U in FIG. 2) related to the picture, audio data (A in FIG. 2) related to the picture, and AUX data (AUX-A: X in FIG. 2) related to the audio data.

In the recording/reproducing apparatus 100, the data stored in the DRAM 14 is subjected to ECC (Error Correcting Code) processing with data corresponding to 16 tracks as a unit, and thereby ECCTB (Error Correction Code Table Block) (H in FIG. 2: packet placed in a sync block to be assigned to the recording of the top of ECC block) storing predetermined information is placed on the first track of every 16 tracks. A unit including 16 tracks, which is a unit of ECC processing, is referred to as ECC bank.

When the top of the pack that can be set as a edit recording starting point is included in the ECC bank, the data indicating that is set in the corresponding ECCTB. Similarly, when the top of the pack that can be set as a edit recording starting point is not included in ECC bank, the data indicating that is set in the corresponding ECCTB. That is, the ECCTB can store a point from which the edit recording can be started.

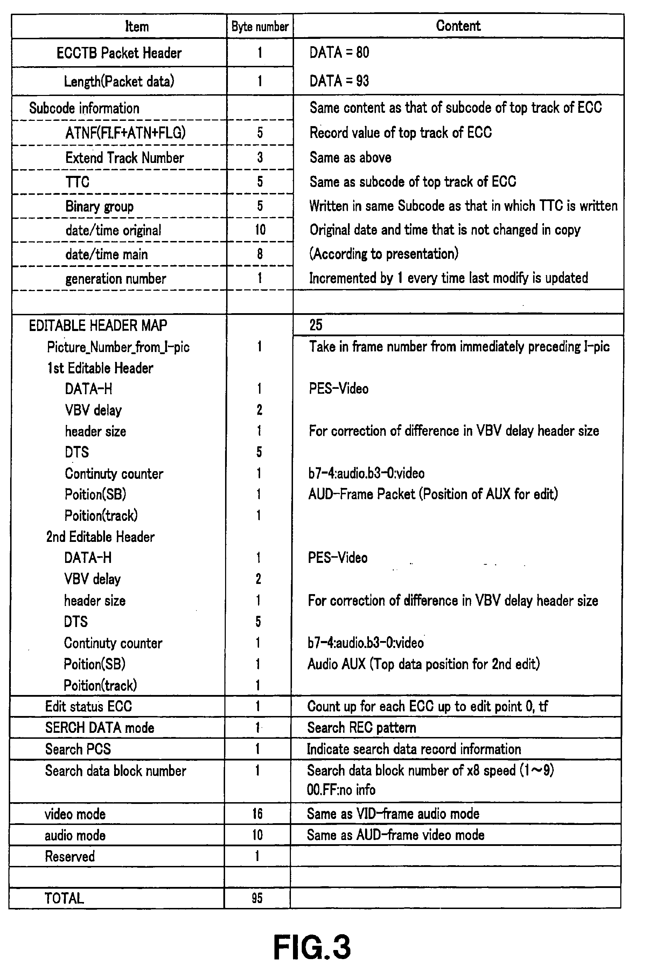

FIG. 3 shows the content of the ECCTB.

The recording processing section 10 of the recording/reproducing apparatus 100 includes a compression section 11 for video data, a compression section 12 for audio data, a system data generation section 13, a DRAM 14, an ECC processing section 15 and an input/output section 16.

The compression section 11 compresses an input HD video signal according to MPEG system and outputs the obtained video data to the DRAM 14. The compression section 12 compresses an audio signal corresponding to the HD video signal according to a system conforming to, for example, MPEG 1 Layer 2 and outputs the obtained audio data to the DRAM 14.

The system data generation section 13 generates system data constituted by AUX data or sub-code data and outputs the system data to the DRAM 14.

The video data compressed by the compression section 11, audio data compressed by the compression section 12, and system data generated by the system data generation section 13 are stored in the DRAM 14 in such a manner to form packs. The DRAM 14 can store data corresponding to six ECC banks. When the input data exceeds that amount, the excess data is sequentially overwritten on the previously stored data.

The ECC processing section 15 applies ECC processing to video data, audio data, and system data constituting the pack with an ECC bank being as a unit. The ECC processing section 15 applies error correcting processing to the data that is stored in the DRAM 14 after being read out from the magnetic tape 40 by the input/output section 16.

The input/output section 16 modulates the data (the data that has been subjected to ECC processing) stored in the DRAM 14 to a system suitable to be recorded on the magnetic tape 40 and records the modulated data on the magnetic tape 40 through the rotation head 30. Further, the input/output section 16 allows the DRAM 14 to store the data that has been read out from the magnetic tape 40 through the rotation head 30.

The controller 20 controls the above sections in the recording processing section 10.

The system controller 80 controls the controller 20 to record data stored in the DRAM 14 onto the magnetic tape 40 or to read out data from the magnetic tape 40 so as to store the readout data on the DRAM 14.

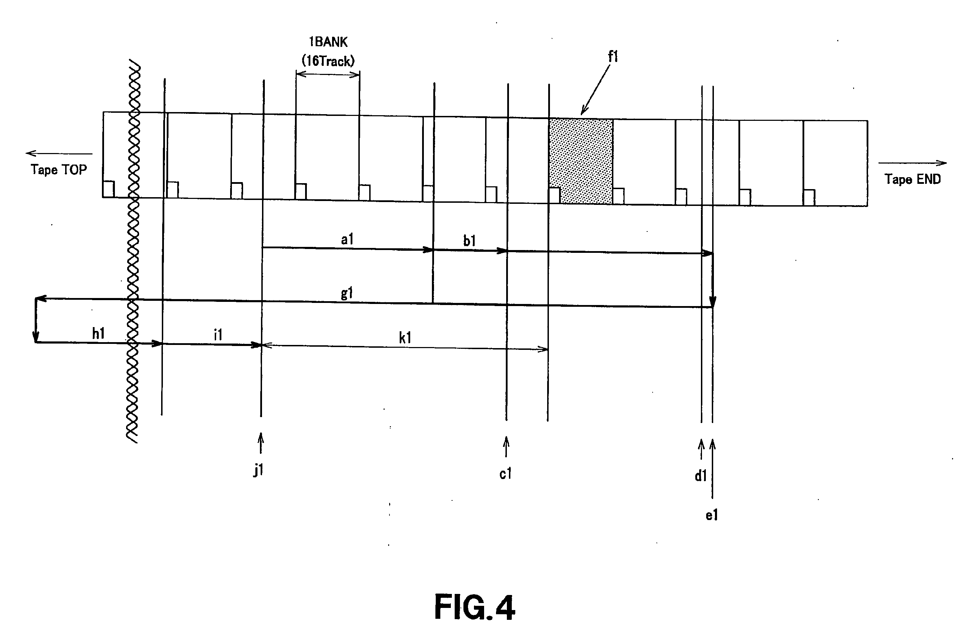

Next, referring to FIG. 4, searching of a edit recording starting point and a method of inevitably finding the same edit staring point when the edit point is searched from the same tape position will be described.

Firstly, the system controller 80 starts tape drive and waits for tracking achievement (a1 in FIG. 4). In this state, the system controller 80 instructs the controller 20 of the recording/reproducing apparatus 100 to search the starting point of edit recording, thereby starting the searching (c1 in FIG. 4). Then, in the recording/reproducing apparatus 100, reproduction data is read out from the magnetic tape 40 by the rotation head 30 and stored in the DRAM 14 through the input/output section 16. After that, the controller 20 allows the ECC processing section 15 to perform error correcting processing and starts the search of the starting point of edit.

In the recording/reproducing apparatus 100, when finding the starting point of edit, the controller 20 notifies the system controller 80 of the ECC bank number corresponding to the starting point (d1 in FIG.4). When determining that the ECC bank number notified by the controller 20 is a desired starting point, the system controller 80 acquires the ECC bank number and ATN (Absolute Track Number) which is included in ECCTB and indicates the distance between the top of the above ECC bank and tape top and promptly stops tape drive (e1 in FIG. 4).

When the ECC bank number corresponding to the edit starting point is notified from the controller 20 of the recording/reproducing apparatus 100 to the system controller 80, the recording processing section 10 is performing error correcting processing for the bank. Therefore, actual tape position of the ECC bank corresponding to the starting point of edit exists at the position before the current position (in other words, actual tape position exists on the tape top side relative to the current position) (f1 in FIG. 4).

When receiving the notification related to the edit starting point, the system controller 80 rewinds the magnetic tape 40 to the previous position relative to the starting point (g1 in FIG. 4) and stabilizes a tape path so that the rotation head 30 can correctly read the magnetic tape 40 (h1 in FIG. 4). After that, the system controller 80 allows the magnetic tape 40 to run at a lower speed of 1/3 fold speed (i1 in FIG. 4) and searches the position a fixed distance (sufficient distance for recording operation to start: j1 in FIG. 4) before the starting position of edit recording. When finding the position a fixed distance before the starting position, the system controller 80 enters a recording-standby state (k1 in FIG. 4).

With the method described above, searching of the starting point of edit is completed. At this time, the waiting time indicated by b in FIG. 3 has been set. Thus, when the starting point of edit is searched from the same tape position, it is possible to inevitably find the same staring point of edit. The waiting time indicated by b1 shown in FIG. 4 is determined depending on the distance of k1 in FIG. 4.

Next, a method of acquiring the start point of the edit will be described in such a manner to correspond to a user's request.

The edit recording that a user requests includes patterns of:

    1. Repeating "recording", "recording-standby", and "recording".
    2. Starting edit recording from complete stop state.
    3. Starting edit recording from currently reproduced image.

Hereinafter, respective patterns will be described.

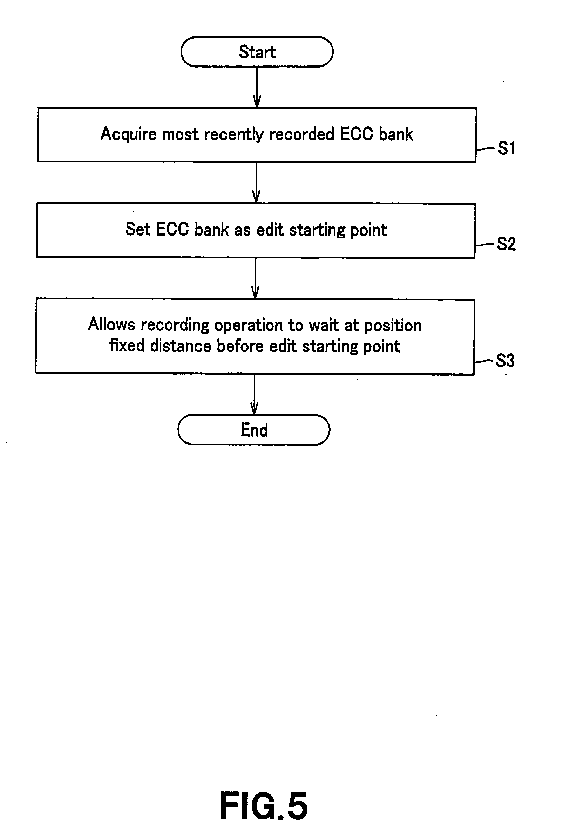

Firstly, the pattern of 1. will be described with reference to a flowchart of FIG. 5.

At the end time of recording, the system controller 80 acquires the number of ECC bank that includes video data most recently recorded from the controller 20 of the recording/reproducing apparatus 100 and ATN included in ECCTB header of that bank (Step S1).

Then, the system controller 80 sets the bank as a starting point of edit, rewinds the magnetic tape 40 by a fixed distance from the edit starting point (step S2), allows recording operation to enter a recording-standby state (step S3), and performs the same processing as g 1 to j 1 shown in FIG. 4, thereby preparing for the next recording start time.

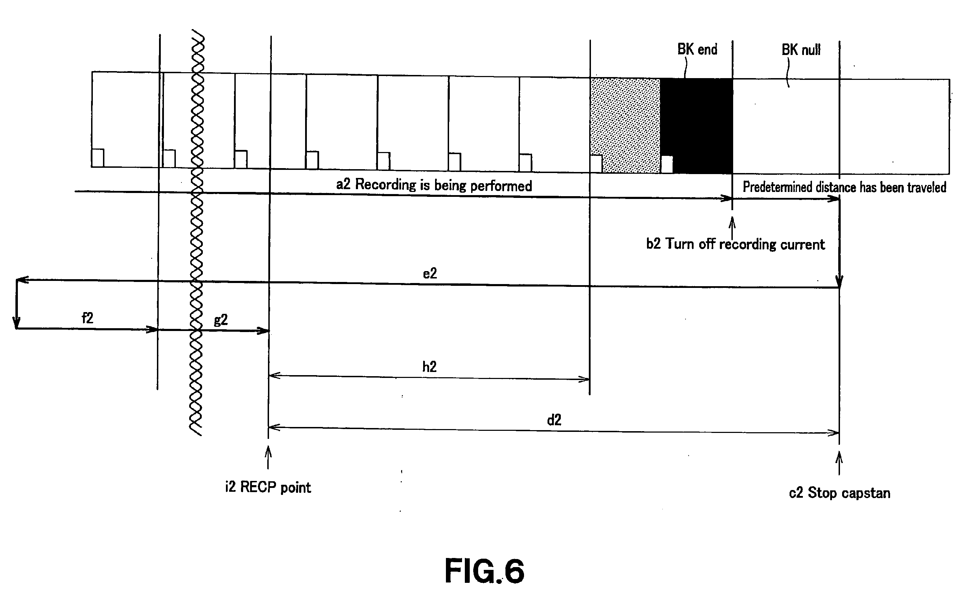

A control performed at the end time of the recording is shown in FIG. 6.

Upon receiving an instruction to end recording operation during the recording operation (a2 in FIG. 6), the system controller 80 turns off a recording-current at the time point when null-writing has been performed by one bank BKnull in the train of the most recently recorded bank (BKend) (starting point of edit recording) that includes V-END indicating recording end and stops a capstan after a fixed distance has been traveled (c2 in FIG. 6). Then, the system controller 80 rewinds (e2 in FIG. 6) the magnetic tape 40 by a predetermined distance (distance from capstan stop point to recording-standby point (d2 in FIG. 6) + distance required to stabilize tape path + distance for fine adjustment) and stabilizes a tape path so that the rotation head 30 can correctly read the magnetic tape 40 (f2 in FIG. 6). After that, the system controller 80 allows the magnetic tape 40 to run at a lower speed of 1/3 fold speed (g2 in FIG. 6) and searches the position a fixed distance (h2 in FIG. 6) before the starting position of edit recording. When finding the position a fixed distance before the starting position, the system controller 80 enters a recording-standby state (i2 in FIG. 6).

In the case of the pattern of 2., by using the above mentioned searching of a edit recording starting point and the method of inevitably finding the same edit starting point when the edit starting point is searched from the same tape position, it is possible to find a edit starting point closest to the current tape stop position.

The pattern of 3. will next be described with reference to a flowchart of FIG. 5.

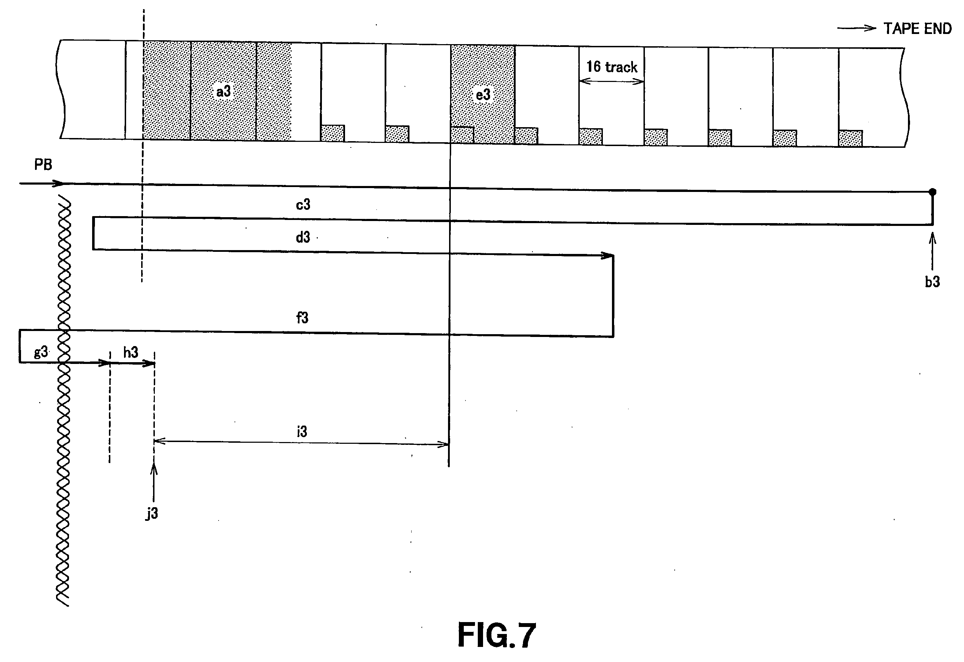

When the operation enters a pause state during reproduction, the tape stop position (b3 in FIG. 7) differs from the tape position (a3 in FIG. 7) at which an image that a user is actually viewing has been recorded. The tape position of the top of the image on the tape position (a3 in FIG. 7) at which an image that a user is actually viewing has been recorded can be calculated by using ETN (Extended Track Number: value indicating the position relative to the top of the different tape from the case of ATN). The ETN can be calculated from DTS (Decoding Time Stamp) that can be acquired from another microcomputer that controls not shown Encode/Decode as follows.

$$DTS = (ETN - 10) \times (\text{clock number} / 10)$$

clock number: 3003 in the case of NTSC and 3600 in the case of PAL

Thus, after calculating the tape position (a3 in FIG. 7) at which an image that a user is actually viewing has been recorded, the system controller 80 rewinds (c3 in FIG. 7) the magnetic tape 40 to the tape top side relative to the position a3 shown in FIG. 7 from the reproduction pause position and performs detection of the start point of edit (d3 in FIG. 7). At the time when the controller 20 of the recording/reproducing apparatus 100 notifies the system controller 80 that the starting point of edit has been detected, the system controller 80 compares the values of ETN indicating bank top included in the ECCTB header of the ECC bank corresponding to the detected edit starting point with the tape position (a3 in FIG. 7) at which an image that a user is actually viewing has been recorded. At this time, when the system controller 80 does not adopt the detected starting point until the magnitude of the above ETN value exceeds the value of the tape position (a3 in FIG. 7) at which an image that a user is actually viewing has been recorded, it is possible to perform the edit recording in such a manner that the image that a user is viewing remains. In this case, the edit starting point is a position e3 shown in FIG. 7.

When the edit starting point is found, the system controller 80 rewinds the magnetic tape 40 to the previous position relative to the starting point (f3 in FIG. 7) and stabilizes a tape path so that the rotation head 30 can correctly read the magnetic tape 40 (g3 in FIG. 7). After that, the system controller 80 allows the magnetic tape 40 to run at a lower speed of 1/3 fold speed (h3 in FIG. 7) and searches the position a fixed distance (sufficient distance for recording operation to start: i3 in FIG. 7) before the starting position of edit recording. When finding the position a fixed distance before the starting position, the system controller 80 enters a recording-standby state (j3 in FIG. 7).

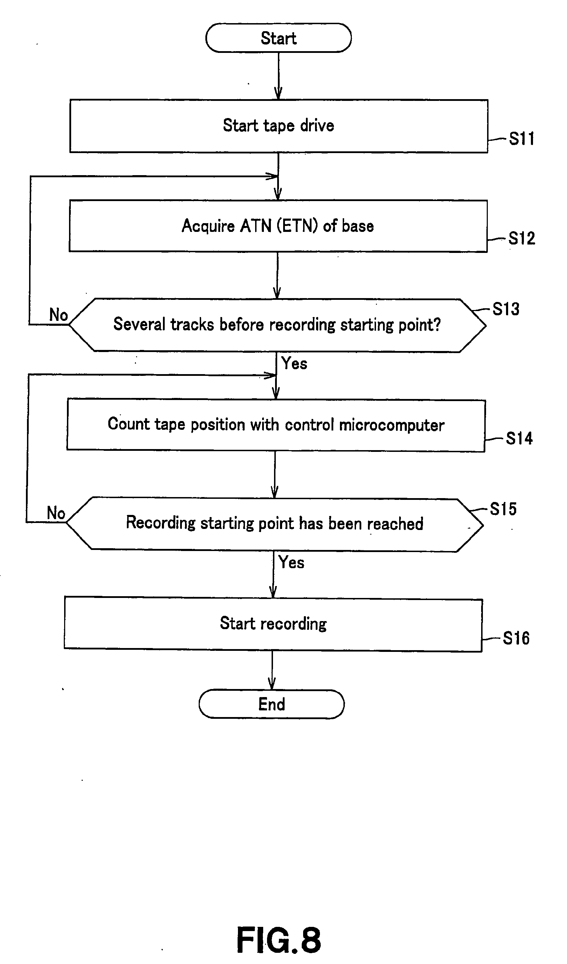

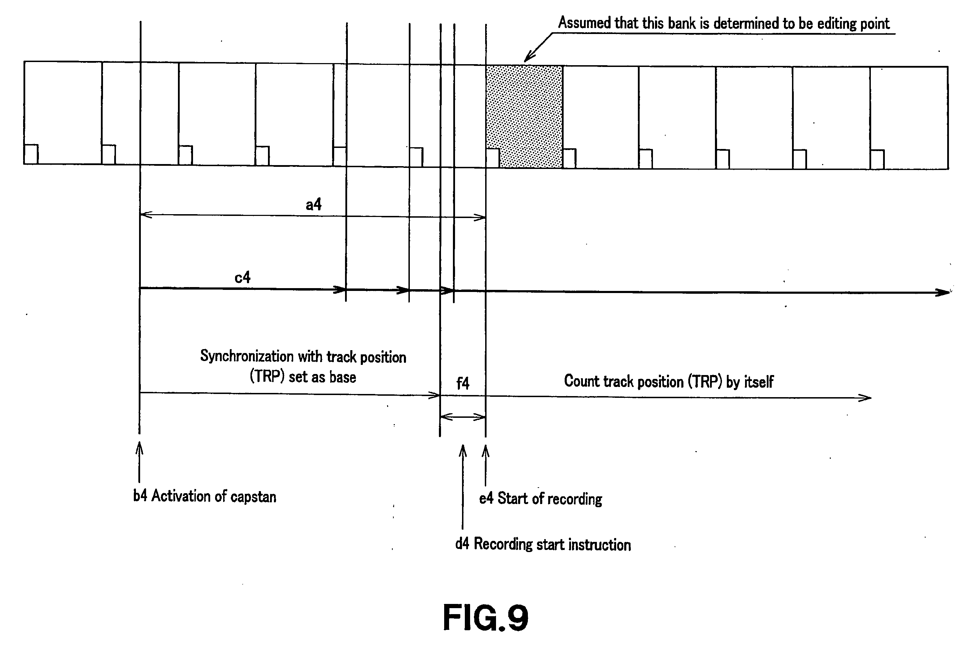

An operation for recording start timing control will next be described with reference to a flowchart of FIG. 8 and FIG. 9.

Firstly, the system controller 80 starts tape drive and waits for tracking achievement (step S11).

The system controller 80 then reads out data that has already been on the magnetic tape 40 to acquire ATN (ETN) indicating the position of the magnetic tape 40, thereby grasping the position of the magnetic tape 40 (step S12).

The system controller 80 then determines whether a position several tracks before the recording starting point has been reached or not. When determining that a position several tracks before the recording starting point has been reached (step S 13), the system controller 80 stops the acquisition of the data that has already been recorded on the magnetic tape 40 and the system controller 80 itself counts the tape position until the recording starting point has been reached (step S 14).

The system controller 80 then determines whether the recording starting point has been reached or not. When determining that the recording starting point has been reached (step S15), the system controller 80 instructs the controller 20 of the recording/reproducing apparatus 100 to start recording of the data stored on the DRAM 14 onto the magnetic tape 40 through the input/output section 16 and rotation head 30 (step S16).

When receiving an instruction of starting the recording operation in a state of being in recording-standby state at the position of the most recently recorded bank (BKend), that is, at the position a fixed distance (a4 in FIG. 9) before the start point of edit recording, the system controller 80 activates the capstan to start the tape drive (b4 in FIG. 9), waits for tracking achievement (c4 in FIG. 9), stops the acquisition of the data recorded on the magnetic tape 40 at the time point when a position several tracks before the recording starting point has been reached, and counts, by itself, the tape position until the recording starting point has been reached (d4 in FIG. 9). When the recording starting point has been reached, the system controller 80 instructs the controller 20 of the recording/reproducing apparatus 100 to start recording of the data stored on the DRAM 14 of the recording processing section 10 onto the magnetic tape 40 through the input/output section 16 and rotation head 30 (e4 in FIG. 9).

That is, the starting point of the edit recording can be obtained at the time when the recording starting bank corresponding to the edit recording starting point, that is, the position (TRP/ETN) of the first track of the most recently recorded bank (BKend) and the position of the track that the system controller 80 itself counts until the recording starting point has been reached correspond to each other. The difference existing until the above correspondence is phase difference (f4 in FIG. 9).

It should be understood by those skilled in the art that various modifications, combinations, sub-combinations and alternations may occur depending on design requirements and other factors insofar as they are within the scope of the appended claims or the equivalents thereof.

**Claims**

1. An edit recording method for use in a recording/reproducing apparatus which refers to, reconstructs, and writes back the content of a base recorded in a recording medium at the time of the edit recording, comprising the steps of:

acquiring, in error-correcting-processing-unit, position information indicating the last record position at the end time of recording;
calculating an edit recording-standby point a predetermined distance before the acquired last record position set as the edit recording starting point;
setting operation mode to a recording-standby state at the calculated edit recording-standby point; and
repeating "recording", "recording-standby", and "recording" based on the position information in error-correcting-processing-unit at the end time of recording.

2. The edit recording method according to claim 1, wherein operation mode is set to a recording-standby state at the edit recording-standby point searched while driving the recording medium at a lower speed.

3. The edit recording method according to either claim 1 or claim 2, wherein, drive of the recording medium is started, and searching of the edit recording starting point is started after a predetermined time has elapsed since tracking is achieved.

4. The edit recording method according to any one of claims 1 to 3, wherein, position information indicating the running position of the recording medium is acquired, the running position is checked, and the timing of supplying a recording current is controlled from the edit recording starting point.

5. A edit recording method for use in a recording/reproducing apparatus which refers to, reconstructs, and writes back the content of a base recorded in a recording medium at the time of the edit recording, comprising the steps of:

acquiring position information indicating the position at which the current reproduced image has been recorded on a recording medium;
comparing the magnitudes of the acquired position information and the position of the edit start point to determine the edit recording starting point such that the current reproduced image is allowed to remain;
calculating an edit recording-standby point a predetermined distance before the determined edit recording starting point;
setting operation mode to a recording standby state at the calculated edit recording-standby point; and
starting drive of the recording medium from the recording-standby state, and starting searching of the edit recording starting point after a predetermined time has elapsed since tracking is achieved.

6. The edit recording method according to claim 5, wherein, position information indicating the running position of the recording medium is acquired, the running position is checked, and the timing of supplying a recording current is controlled from the edit recording starting point.

7. The edit recording method according to either claim 5 or claim 6, wherein operation mode is set to a recording-standby state at the edit recording-standby point searched while driving the recording medium to run at a lower speed.

8. A recording/reproducing apparatus which refers to, reconstructs, and writes back the content of a base recorded in a recording medium at the time of the edit recording, comprising:

control means for acquiring, in error-correcting-processing-unit, position information indicating the last record position at the end time of recording, calculating a edit recording-standby point a predetermined distance before the acquired last record position set as the edit recording starting point, and setting operation mode to a recording-standby state at the calculated edit recording-standby point, wherein
"recording", "recording-standby", and "recording" are repeated based on the position information in error-correcting-processing-unit at the end time of recording.

9. The recording/reproducing apparatus according to claim 8, wherein the control means sets operation mode to a recording-standby state at the edit recording-standby point searched while driving the recording medium at a lower speed.

10. The recording/reproducing apparatus according to either claim 8 or claim 9, wherein, the control means starts drive of the recording medium, and starts searching of the edit recording starting point after a predetermined time has elapsed since tracking is achieved.

**11.** The recording/reproducing apparatus according to any one of claims 8 to 10, wherein the control means acquires position information indicating the running position of the recording medium, checks the running position, and controls the timing of supplying a recording current from the edit recording starting point.

**12.** A recording/reproducing apparatus which refers to, reconstructs, and writes back the content of a base recorded in a recording medium at the time of the edit recording, comprising:

control means for acquiring position information indicating the position at which the current reproduced image has been recorded on a recording medium, comparing the magnitudes of the acquired position information and the position of the edit start point to determine the edit recording starting point such that the current reproduced image is allowed to remain, calculating the edit recording-standby point a predetermined distance before the determined edit recording starting point, and setting operation mode to a recording standby state at the calculated edit recording-standby point, wherein

drive of the recording medium is started from the recording-standby state, and searching of the edit recording starting point is started after a predetermined time has elapsed since tracking is achieved.

**13.** The recording/reproducing apparatus according to claim 12, the control means acquires position information indicating the running position of the recording medium, checks the running position, and controls the timing of supplying a recording current from the edit recording starting point.

**14.** The recording/reproducing apparatus according to either claim 12 or claim 13, wherein the control means sets operation mode to a recording-standby state at the edit recording-standby point searched while driving the recording medium to run at a lower speed.

**FIG.1**

**FIG.2**

| Item | Byte number | Content |
|---|---|---|
| ECCTB Packet Header | 1 | DATA = 80 |
| Length(Packet data) | 1 | DATA = 93 |
| Subcode information | | Same content as that of subcode of top track of ECC |
| ATNF(FI.F+ATN+FLG) | 5 | Record value of top track of ECC |
| Extend Track Number | 3 | Same as above |
| TTC | 5 | Same as subcode of top track of ECC |
| Binary group | 5 | Written in same Subcode as that in which TTC is written |
| date/time original | 10 | Original date and time that is not changed in copy |
| date/time main | 8 | (According to presentation) |
| generation number | 1 | Incremented by 1 every time last modify is updated |
| | | |
| EDITABLE HEADER MAP | | 25 |
| Picture_Number_from_I-pic | 1 | Take in frame number from immediately preceding I-pic |
| 1st Editable Header | | |
| DATA-H | 1 | PES-Video |
| VBV delay | 2 | |
| header size | 1 | For correction of difference in VBV delay header size |
| DTS | 5 | |
| Continuty counter | 1 | b7-4:audio.b3-0:video |
| Poition(SB) | 1 | AUD-Frame Packet (Position of AUX for edit) |
| Poition(track) | 1 | |
| 2nd Editable Header | | |
| DATA-H | 1 | PES-Video |
| VBV delay | 2 | |
| header size | 1 | For correction of difference in VBV delay header size |
| DTS | 5 | |
| Continuty counter | 1 | b7-4:audio.b3-0:video |
| Poition(SB) | 1 | Audio AUX (Top data position for 2nd edit) |
| Poition(track) | 1 | |
| Edit status ECC | 1 | Count up for each ECC up to edit point 0, tf |
| SERCH DATA mode | 1 | Search REC pattern |
| Search PCS | 1 | Indicate search data record information |
| Search data block number | 1 | Search data block number of x8 speed (1~9) 00.FF:no info |
| video mode | 16 | Same as VID-frame audio mode |
| audio mode | 10 | Same as AUD-frame video mode |
| Reserved | 1 | |
| | | |
| TOTAL | 95 | |

# FIG.3

EP 1 630 812 A2

1BANK
(16Track)

f1

Tape TOP

Tape END

a1

b1

g1

h1

i1

k1

j1

c1

d1

e1

**FIG.4**

Start

Acquire most recently recorded ECC bank ——S1

Set ECC bank as edit starting point ——S2

Allows recording operation to wait at position
fixed distance before edit starting point ——S3

End

# FIG.5

BK end

BK null

a2 Recording is being performed

Predetermined distance has been traveled

b2 Turn off recording current

e2

f2

g2

h2

d2

i2 RECP point

c2 Stop capstan

**FIG.6**

EP 1 630 812 A2

**FIG.7**

EP 1 630 812 A2

```
                    ┌─────────────┐
                    │    Start    │
                    └──────┬──────┘
                           │
                           ▼
        ┌──────────────────────────────────────────┐
        │              Start tape drive             │───S11
        └──────────────────────────────────────────┘
                           │
                           ▼
        ┌──────────────────────────────────────────┐
        │           Acquire ATN (ETN) of base       │───S12
        └──────────────────────────────────────────┘
                           │
                           ▼
  No  ╱────────────────────────────────────────────────╲  ───S13
 ◄────   Several tracks before recording starting point?
      ╲────────────────────────────────────────────────╱
                           │ Yes
                           ▼
        ┌──────────────────────────────────────────┐
        │   Count tape position with control microcomputer │───S14
        └──────────────────────────────────────────┘
                           │
                           ▼
  No  ╱────────────────────────────────────────────────╲  ───S15
 ◄────     Recording starting point has been reached
      ╲────────────────────────────────────────────────╱
                           │ Yes
                           ▼
        ┌──────────────────────────────────────────┐
        │              Start recording              │───S16
        └──────────────────────────────────────────┘
                           │
                           ▼
                    ┌─────────────┐
                    │     End     │
                    └─────────────┘
```

# FIG.8

Assumed that this bank is determined to be editing point

a4

c4

Synchronization with track position
(TRP) set as base

f4

Count track position (TRP) by itself

b4 Activation of capstan

e4 Start of recording

d4 Recording start instruction

**FIG.9**

EP 1 630 812 A2